# FASCICULE DE BREVET EUROPEEN

(11) **EP 3 072 177 B1**
(45) Date de publication et mention de la délivrance du brevet: **21.03.2018**
(21) Numéro de dépôt: 14812634.5
(22) Date de dépôt: 17.11.2014
(51) Int. Cl.: H01M 10/0525, H01M 10/0565, H01M 10/058, H01M 10/42

(54) **COPOLYMÈRE POUR BATTERIE BIPOLAIRE**
COPOLYMER FÜR BIPOLARE BATTERIE
COPOLYMER FOR BIPOLAR BATTERY

(30) Priorité: 20.11.2013 FR 1361395
(43) Date de publication de la demande: 28.09.2016
(73) Titulaire: Commissariat à l'Énergie Atomique et aux Énergies Alternatives, 75015 Paris (FR)
(72) Inventeur: MOREAU, Gilles, 38000 Grenoble (FR); PICARD, Lionel, 38170 Seyssinet-Pariset (FR)
(74) Mandataire: Nony
(86) Numéro de dépôt international: PCT/IB2014/066100
(87) Numéro de publication internationale: WO 2015/075620

(56) Documents cités:
- WO-A1-2010/101794
- WO-A2-2007/142731
- JP-A- 2007 048 541
- JP-A- 2010 244 943
- BYEONGMOON JEONG ET AL: "Thermosensitive sol-gel reversible hydrogels", ADVANCED DRUG DELIVERY REVIEWS, ELSEVIER, AMSTERDAM, NL, vol. 54, no. 1, 17 janvier 2002 (2002-01-17), pages 37-51, XP002529601, ISSN: 0169-409X, DOI: 10.1016/S0169-409X(01)00242-3

## Description

### Domaine technique

La présente invention concerne le domaine des générateurs électrochimiques au lithium, qui fonctionnent selon le principe d'insertion ou de désinsertion, ou autrement dit intercalation-désintercalation, de lithium dans au moins une électrode.

Elle concerne notamment le domaine des accumulateurs électrochimiques au lithium comportant au moins un collecteur de courant à fonction bipolaire, aussi appelés batteries bipolaires.

Plus précisément, l'invention vise à améliorer l'étanchéité d'une batterie bipolaire vis-à-vis de son électrolyte liquide.

### Etat de la technique

L'architecture des batteries lithium-ion conventionnelles est une architecture que l'on peut qualifier de monopolaire, car comprenant une seule cellule électrochimique comportant une anode, une cathode et un électrolyte.

L'architecture de ce type de batteries est principalement développée sur une architecture monopolaire intégrée par bobinage ou par empilement.

Dans une architecture monopolaire par bobinage, encore appelé « roll-to-roll » en langue anglaise, le bobinage est constitué d'un collecteur de courant sur lequel est déposé en continu un matériau d'électrode positive (cathode), un séparateur en matériau polymère ou céramique venant s'intercaler à un matériau d'électrode négative (anode) lui-même déposé sur un autre collecteur de courant.

A titre d'exemples de batteries de géométrie d'architecture monopolaire par bobinage, on peut citer celles divulguées dans la demande de brevet US 2006/0121348, et les brevets US 7348098 et US 7338733.

Pour ce qui est de l'architecture des batteries lithium-ion conventionnelles par empilement, encore appelé « stack » en langue anglaise, elle correspond à un empilement d'électrodes positives, de séparateurs et d'électrodes négatives assemblés pour permettre d'avoir une grande surface active de matériau.

A titres d'exemples de batteries à géométrie en empilement, on peut citer celles divulguées dans les demandes de brevet US 2008/060189, US 2008/0057392, et brevet US 7335448.

Les architectures monopolaires par bobinage ou par empilement présentent comme avantage significatif d'avoir une grande surface active de matériau. Toutefois, la différence de potentiel y est restreinte à la valeur unitaire de la différence de potentiel entre les deux matériaux d'électrode utilisés.

Deux types d'emballages, rigides ou souples, sont généralement considérés pour les batteries monopolaires. Un emballage rigide permet de supporter des contraintes mécaniques ainsi que des surpressions/dépressions, notamment occasionnées lors de son remplissage en électrolyte, mais il est massif et volumineux. Pour sa part, un emballage souple, moins dense que l'emballage rigide, permet d'obtenir des densités d'énergie plus importantes. Il est en outre moins résistant aux agressions extérieures.

Usuellement le remplissage de ces batteries monopolaires par un électrolyte liquide se fait à température ambiante par tirage sous vide de l'intérieur de l'élément, puis par remplissage à température et pression ambiante. Il est à noter qu'un emballage souple est plus contraignant lors du remplissage. Il est en effet plus complexe à remplir en électrolyte car plus sujet aux variations de pressions et plus complexe à étanchéifier.

Afin d'augmenter le potentiel moyen d'un accumulateur Li-ion monopolaire tout en conservant une densité d'énergie comparable, il a été élaboré des batteries dotées d'une pluralité de cellules électrochimiques en série. L'architecture de la batterie est ainsi qualifiée de bipolaire car elle comprend une cathode d'une cellule et une anode d'une cellule adjacente qui sont supportées sur un même collecteur de courant sous forme d'une plaque et qualifié lui-même d'électrode bipolaire. Une batterie bipolaire met ainsi en série plusieurs accumulateurs monopolaires par l'intermédiaire des électrodes ou collecteurs de courant bipolaires. On peut citer ici de nombreux demandes de brevets ou brevets concernant de telles batteries bipolaires, tels que US 7279248, US 7220516, US 7320846, US 7163765, WO 03/047021, WO 2006/061696, US 7097937, US2007/00115047.

Les principaux avantages des batteries bipolaires sont d'avoir une résistance électrique réduite, par rapport à des accumulateurs monopolaires reliés en série par des connecteurs extérieurs, d'avoir une masse réduite et de ne pas comporter de volumes inutiles, c'est-à-dire que l'emballage contenant la batterie ne comprend substantiellement pas d'espaces vides. Une batterie bipolaire est en outre en format souple, car ses propres électrodes sont utilisées pour l'étanchéité inter-compartiments.

Le principal problème technique rencontré lors de la fabrication des batteries bipolaires est de réaliser des compartiments, correspondant aux cellules électrochimiques, et encore appelés « éléments unitaires » qui soient étanches les uns vis-à-vis des autres au regard de l'électrolyte liquide qu'elles contiennent. Pour des raisons évidentes, il est nécessaire d'éviter les fuites. Une mauvaise étanchéité entre les différents compartiments entrainera obligatoirement un dysfonctionnement de la batterie bipolaire par court-circuits ioniques. Les méthodes classiques de remplissage sont donc confrontées à la nécessité de réaliser des compartiments parfaitement étanches à l'électrolyte liquide et ne comportant pas de gaz emprisonnés.

Plusieurs solutions ont déjà été envisagées pour améliorer le remplissage des batteries bipolaire en électrolyte.

Usuellement, la méthode de remplissage d'une batterie requiert une mise sous vide de l'emballage contenant l'ensemble anode/séparateur/cathode, et l'introduction de l'électrolyte liquide, sous pression ou non. Ces opérations sont généralement suivies d'un temps d'imprégnation pour permettre à l'électrolyte de remplir toutes les zones de vide, ou pores, de l'ensemble anode/séparateur/cathode.

L'opération d'étanchéité est classiquement effectuée consécutivement pour assurer l'intégrité du système. Elle est généralement réalisée par soudure ou application d'une pièce rapportée à l'emballage contenant l'ensemble anode/séparateur/cathode/électrolyte. Il s'ensuit malheureusement une inhomogénéité de matière entre les pièces rapportées et l'emballage, préjudiciable à l'étanchéité. Qui plus est, une telle méthode est complexe de mise en oeuvre dans le cas d'un élément bipolaire. Les collecteurs de courant faisant office d'emballage, les performances de la batterie peuvent en effet être détériorées au cours des étapes de remplissage et d'étanchéité.

Les autres solutions proposées dans les documents JP 2008166256, US 2009/0282672 et TW 201044674 présentent également l'inconvénient de conduire à une étanchéité non-homogène c'est-à-dire dégradée.

Certes, d'autres solutions, en particulier celles divulguées dans les documents JP 2008130450 et US 7163765, permettent de pallier au problème d'étanchéité non-homogène. Toutefois, ces solutions demeurent en revanche trop complexes en termes de mise en oeuvre. Le document JP 2010244943 divulgue l'emploi d'un polymère à changement de phase réversible liquide/solide imprégnant le séparateur d'une batterie lithium-ion. En conséquence, il demeure un besoin de disposer d'une solution efficace pour garantir une étanchéité homogène, pérenne et de mise en oeuvre aisée, dans le cadre du remplissage de l'électrolyte dans des batteries bipolaire en particulier.

La présente invention a précisément pour objectif de répondre à ce besoin.

En particulier, l'invention a pour objectif de proposer une solution améliorée pour réaliser, dans une batterie bipolaire Li-ion, et plus généralement dans un générateur électrochimique au lithium, le remplissage de l'électrolyte toute en permettant de garantir l'étanchéité des compartiments entre eux vis-à-vis de l'électrolyte liquide.

### Exposé de l'invention

La présente invention a ainsi pour objet principal l'utilisation d'un électrolyte à changement de phase réversible liquide/solide selon la revendication 1 pour la préparation d'une batterie ou accumulateur lithium-ion bipolaire dans laquelle ledit électrolyte contient au moins un copolymère à blocs comprenant au moins un segment polymérique A soluble dans ledit électrolyte et au moins un segment polymérique B doté d'une température de solubilisation « T » dans ledit électrolyte, les segments polymériques A et B étant présents en des quantités suffisantes pour permettre la gélification physique de l'électrolyte à une température supérieure ou égale à la température « T ».

Ledit copolymère à bloc est dit thermosensible. Ainsi, le copolymère considéré selon la présente invention procure avantageusement une augmentation de la viscosité, voire la gélification de l'électrolyte pour batterie lithium-ion, lorsqu'il est porté à une température au moins égale à la température « T », puis le retour de l'électrolyte à un état liquide lorsque la température de la batterie redescend en dessous de « T ». C'est à ce titre que l'électrolyte est appelé « à changement de phase réversible liquide/solide ».

Cette aptitude du copolymère selon l'invention est pour l'essentiel liée à la présence d'au moins un segment polymérique (B) non soluble dans l'électrolyte à une température inférieure à « T » mais qui devient soluble à la température « T ».

Sans vouloir être lié par une quelconque théorie, il semble que la solubilisation de ce segment polymérique dans l'électrolyte, obtenue à une température supérieure à « T », conduit à un développement des chaînes constituant ce segment polymérique permettant ainsi des pontages par interactions physiques entre les chaînes des segments polymériques B voire entre les chaînes des segments polymériques B et des segments polymériques A, et ainsi de former un réseau tridimensionnel, par réticulation physique, en créant des liaisons fortes par exemple des liaisons hydrogène. En revanche, à une température inférieure à « T », ces segments polymériques B sont non solubles dans l'électrolyte, et en conséquence leurs chaines sont repliées sur elles-mêmes, pelotonnées.

Certes, une utilisation de copolymères à blocs a déjà été considérée dans les batteries lithium, mais, à la connaissance des inventeurs, essentiellement pour améliorer la conductivité ionique de ces batteries. Ces applications sont notamment décrites dans les documents WO 2010/101794, WO 2009/131961 et WO 2007/142731. Qui plus est, les copolymères qui y sont décrits sont différents de ceux considérés selon l'invention.

La présente invention vise encore un procédé de réalisation d'une batterie ou d'un accumulateur au lithium selon la revendication 10, comportant au moins une cellule électrochimique (C) constituée d'au moins une anode et une cathode de part et d'autre d'un séparateur imprégné d'un électrolyte, et un compartiment agencé pour contenir la/les cellule(s) électrochimique(s) avec étanchéité tout en étant traversé par une partie des collecteurs de courant formant les pôles, dans ce procédé :
- ledit électrolyte est à changement de phase réversible liquide/solide et contient au moins un copolymère à blocs comprenant au moins un segment polymérique A soluble dans ledit électrolyte et au moins un segment polymérique B doté d'une température de transition de solubilisation « T » dans ledit électrolyte, les segments polymériques A et B étant présents en des quantités suffisantes pour permettre la gélification physique de l'électrolyte à une température supérieure ou égale à la température « T » et
- ledit procédé comprend au moins les étapes consistant à :
- manipuler ledit électrolyte lors de l'élaboration de ladite cellule à une température supérieure ou égale à la température « T » et
- abaisser la température dudit électrolyte, à l'issue de la réalisation de l'étanchéité de ladite cellule contenant ledit électrolyte gélifié, à une température inférieure à la température T.

Le procédé selon l'invention est avantageux à plusieurs titres pour la réalisation d'une batterie ou d'un accumulateur au lithium comportant un empilement de plusieurs c'est-à-dire au moins deux cellules électrochimiques (C).

Ainsi, il permet avantageusement un assemblage rapide de l'électrolyte gélifié « à chaud » dans le volume restreint du compartiment, encore appelé « caisson ».

Le retour de l'électrolyte sous sa forme liquide rend possible une imprégnation homogène du séparateur.

Enfin, à une température inférieure à la température « T », et en particulier à température ambiante, l'électrolyte retrouve ses caractéristiques optimales d'utilisation dans une batterie Li-ion bipolaire.

Le mode d'assemblage proposé selon l'invention permet donc d'avoir une étanchéité parfaite, une tenue mécanique autonome liée aux conditions de vide interne de l'élément, de même qu'un parfaite imprégnation grâce aux conditions de vide interne de l'élément.

D'autres avantages et caractéristiques apparaitront à la lecture de la description et des figures qui suivent.

### Description des figures

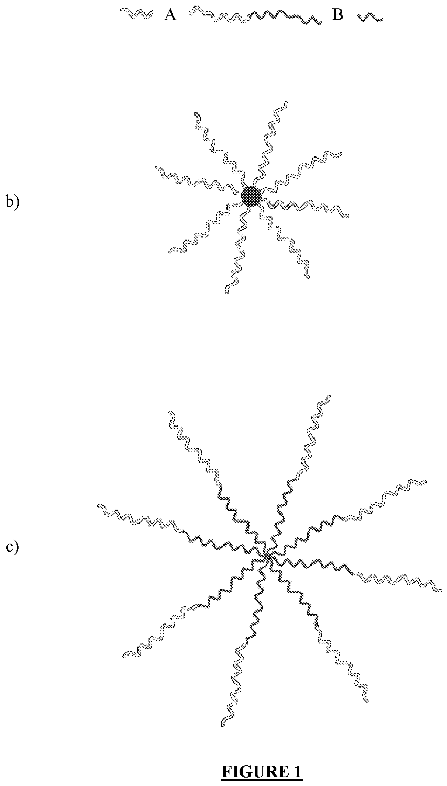

- La figure 1 présente un copolymère dibloc,
   en a) est représenté le dibloc de base constitué du segment polymérique A (clair) et du segment polymérique B (foncé),
   en b) est représenté le dibloc à une température inférieure à « T » : le segment polymérique A (clair) est déployé et le segment polymérique B (foncé) est sous forme repliée/pelotonnée,
   en c) est représenté le dibloc à une température supérieure à « T » : le segment polymérique A (clair) et le segment polymérique B (foncé) sont sous forme déployée.

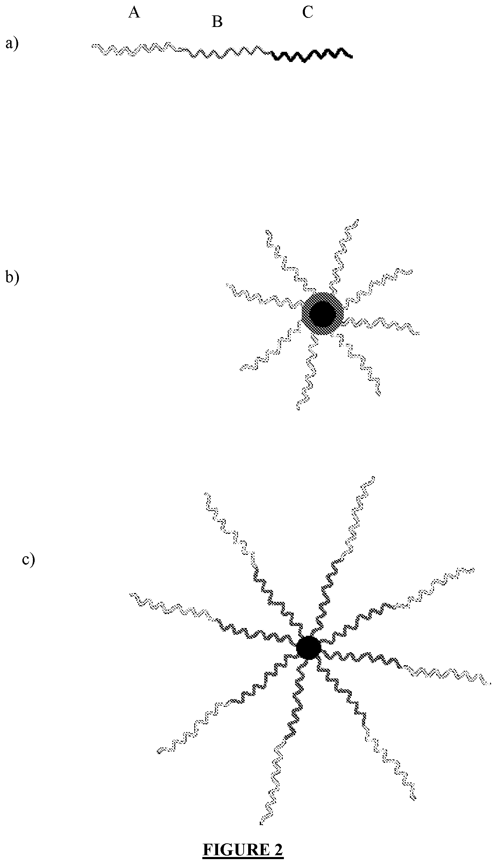

- La figure 2 présente un copolymère tribloc,
   en a) est représenté le tribloc de base constitué du segment polymérique A (clair), du segment polymérique B (foncé) et du segment polymérique C (noir),
   en b) est représenté le tribloc à une température inférieure à « T » : le segment polymérique A est déployé, tandis que les segments polymériques B et C sont sous forme repliée/pelotonnée,
   en c) est représenté le tribloc à une température supérieure à « T » : les segments polymériques A et B sont sous forme déployée tandis que le segment polymérique C est sous forme repliée/pelotonnée.

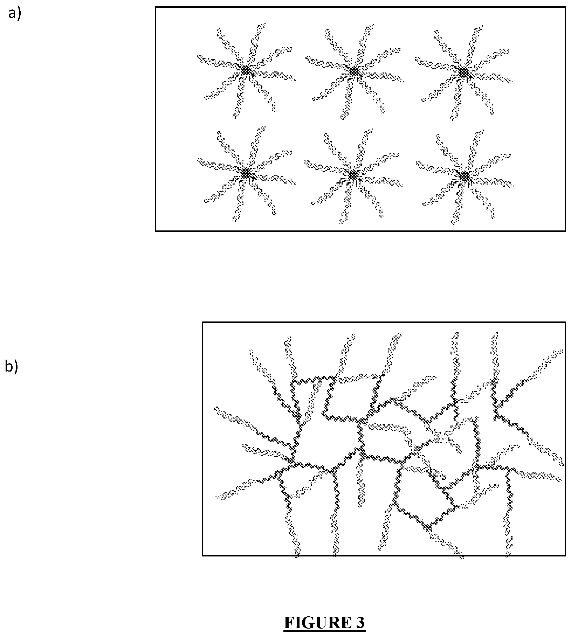

- La figure 3 représente le comportement des copolymères diblocs en fonction de la température.
   Le schéma a) représente le comportement des copolymères diblocs à une température inférieure à T : les segments polymériques A (clair) sont déployés et les segments polymériques B (foncé) sont sous forme repliée/pelotonnées. Sous cette configuration, l'électrolyte est liquide c'est-à-dire que la viscosité de l'électrolyte n'est pas modifiée.
   Le schéma b) représente le comportement des copolymères diblocs à une température supérieure à T : le segment polymérique A (clair) et le segment polymérique B (foncé) sont sous forme déployée. Sous cette configuration, l'électrolyte est sous forme gélifiée.

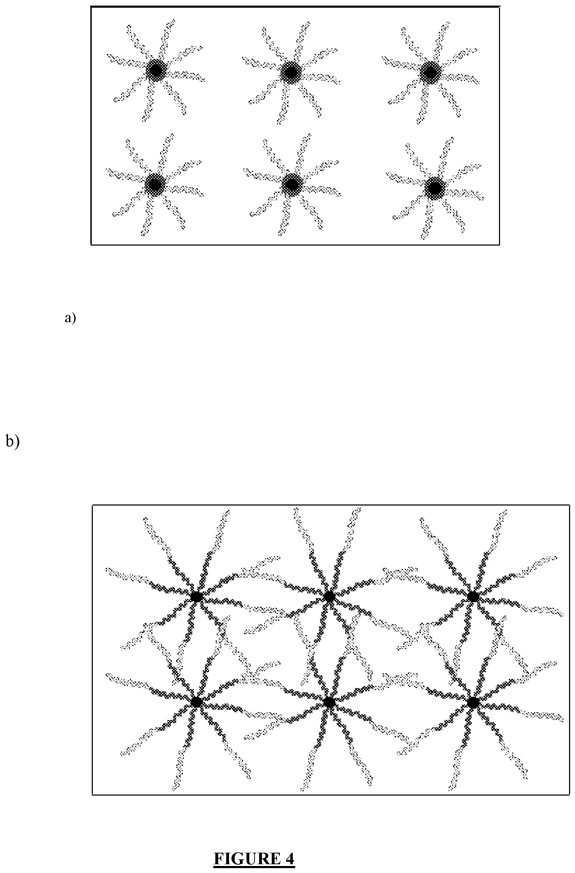

- La figure 4 représente le comportement des copolymères triblocs en fonction de la température.
   Le schéma a) représente le comportement des copolymères triblocs à une température inférieure à T : les segments polymériques A sont déployés, tandis que les segments polymériques B et C sont sous forme repliée/pelotonnée. Sous cette configuration, l'électrolyte est liquide c'est-à-dire que la viscosité de l'électrolyte n'est pas modifiée.
   Le schéma b) représente le comportement des copolymères triblocs à une température supérieure à T : les segments polymériques A et B sont sous forme déployée tandis que les segments polymériques C sont sous forme repliée/pelotonnée. Sous cette configuration, l'électrolyte est sous forme gélifiée.
- La figure 5 représente un procédé de réalisation d'éléments bipolaires pour batterie à architecture « par empilement »
- La figure 6 représente un procédé de réalisation d'éléments bipolaires pour batterie à architecture « par bobinage »

### Définitions

Par polymère « soluble » dans un solvant, au sens de la présente invention, on entend un polymère qui, à la concentration de 0,1 % en poids de matière active dans ledit solvant à 25 °C, conduit à une solution ou une suspension macrocospiquement homogène, transparente ou translucide, c'est-à-dire ayant une valeur de transmittance à une longueur d'onde de 500 nm à travers un échantillon de 1 cm d'épaisseur d'au moins 70 %, de préférence 80 %.

Par polymère « thermo-sensible » au sens de la présente invention, on entend un polymère dont les propriétés, en particulier vis-à-vis de la viscosité, vont varier en fonction de la température. Le caractère « thermo-sensible » des polymères utilisés selon l'invention est essentiellement dû à la présence du segment polymérique (B) qui possède une température de solubilisation « T ».

La température « T » désigne dans le cadre de l'invention la température de changement d'état de l'électrolyte. A partir de cette température, l'électrolyte privilégie un état gélifié et en deçà de cette température, il est liquide.

Par « température de solubilisation » au sens de la présente invention, on entend une température au-dessus de laquelle ledit polymère est soluble dans le milieu utilisé en particulier dans l'électrolyte mis en oeuvre.

### Description détaillée

### I - Copolymère thermosensible

Comme mentionné précédemment, le copolymère à blocs utilisé dans la présente invention comprend au moins un segment polymérique A soluble dans ledit électrolyte, au moins un segment polymérique B doté d'une température de solubilisation « T » dans ledit électrolyte et le cas échéant, au moins un segment polymérique C.

Les segments polymériques (A), (B) et (C) sont donc de nature différente.

Pour des raisons manifestes, la nature et la longueur de chacun des segments polymériques considéré respectivement pour (A), (B) et (C) sont choisies en fonction des propriétés recherchées et notamment en fonction de l'électrolyte choisi, en particulier les segments polymériques peuvent être amphiphiles ou de nature très proche.

De même, le copolymère à blocs utilisé selon l'invention est avantageusement électro-inactif. Il n'a ainsi sensiblement pas d'effets sur les performances de la batterie dans les conditions normales d'utilisation, et en particulier lorsque la température de la batterie est inférieure à « T », notamment à température ambiante.

### Segment polymérique A

Le segment polymérique A permet avantageusement la stabilisation stérique de l'électrolyte et permet ainsi d'éviter les risque de sédimentation.

Comme précédemment mentionné, le segment polymérique A est soluble dans ledit électrolyte quelle que soit la température, en particulier il est soluble à une température inférieure à « T ».

Avantageusement, le segment polymérique A possède une masse molaire allant de 2 000 g.mol⁻¹ à 300 000 g.mol⁻¹ préférentiellement de 8 000 g.mol⁻¹ à 80 000 g.mol⁻¹.

De préférence, le segment polymérique A présente un degré de polymérisation DP_{A} supérieur à 10, de préférence supérieur à 20, plus particulièrement allant de 50 à 800.

Tout polymère soluble dans l'électrolyte mis en oeuvre peut être utilisé à titre de segment polymérique A.

Selon un mode préféré, le segment polymérique A est choisi parmi les polymères suivants : polyacrylates, polyméthacrylates, polycarbonates, polyestercarbonates, polylactones, polylactames, polyesters, polyéthers, les homopolymères et copolymères statistiques solubles de polyéthers, en particulier de polyoxyéthylène, polyoxypropylène, polyoxybutylène, ainsi que les copolymères de ces polymères ou monomères correspondants.

Le segment polymérique A peut donc être constitué de monomères de même nature ou de monomères de nature différente.

Selon un mode particulièrement préféré, le segment polymérique A est figuré par un polymère choisi parmi les polycarbonates, les polyéthers et leurs copolymères.

### Segment polymérique B

Le copolymère à blocs utilisé dans la présente invention comprend en outre au moins un segment polymérique B doté d'une température de solubilisation « T » dans ledit électrolyte.

De préférence, le segment polymérique B possède une masse molaire allant de 2 000 g.mol⁻¹ à 300 000 g.mol⁻¹ préférentiellement de 8 000 g.mol⁻¹ à 80 000 g.mol⁻¹.

De préférence, le segment polymérique B présente un degré de polymérisation DP_{B} supérieur à 10, de préférence supérieur à 20, plus particulièrement allant de 50 à 800.

Selon un mode préféré, le segment polymérique B est un polymère obtenu à partir d'au moins un monomère choisi parmi les monomères suivants : les acides acryliques et méthacryliques, les N-alkyl-acrylamides ou N-alkyl-méthacrylamides, en particulier le N-isopropylacrylamide, le N-isopropylmethacrylamide, le N,N'diéthylacrylamide, les saccharides, le fluorure de vinylidène, l'Hexafluoropropylène.

Selon un mode particulièrement préféré, le segment polymérique B est un polymère choisi parmi les poly (N-alkyl-acrylamides), poly(N-alkyl-méthacrylamides), les polysaccharides, le polyfluorure de vinylidène (PVdF) et les copolymères polyfluorures de vinylidène-hexafluoropropylène (PVdF-HFP).

Avantageusement, le ratio molaire segments polymériques B/ segments polymériques A est supérieur à 0.5, et de préférence va de 1 à 10 et plus préférentiellement de 2 à 5.

### Segment polymérique C

Avantageusement, le copolymère à blocs comprend en outre au moins un segment polymérique C insoluble dans l'électrolyte. Plus précisément, le segment polymérique C est insoluble dans l'électrolyte quelle que soit la température, en particulier il est insoluble à une température supérieure à « T ».

Sans vouloir être lié à une quelconque théorie, le segment polymérique C contribue à la création de noeuds de réticulation qui vont stabiliser le réseau formé par les copolymères à blocs et ainsi améliorer la structure du gel. Le segment polymérique C permet ainsi d'augmenter le module élastique du gel.

En outre la présence de segments polymériques C dans le copolymère à blocs permet d'utiliser ledit copolymère à blocs dans l'électrolyte en quantité moindre sans que la stabilité de l'électrolyte sous forme gélifiée soit altérée.

De préférence, le segment polymérique C est choisi parmi les polyoléfines saturées ou insaturées, branchées ou non branchées, en particulier en C₂-C₁₂, le polystyrène et leurs mélanges et leurs copolymères.

Avantageusement, le ratio molaire segments polymériques A/ segments polymériques C va de 0.5 à 10 préférentiellement de 1 à 5.

Avantageusement, le ratio molaire segments polymériques B/ segments polymériques C va de 1 à 10, préférentiellement de 1 à 3.

Les copolymères à blocs selon l'invention peuvent être obtenus par polymérisation contrôlée radicalaire, anionique ou cationique (ATRP (Atom-transfert radical polymerization), ITRP (iodine-transfert radical polymérisation), RAFT (reversible Addition fragmentation chain transfert)...). Ces types de polymérisation permettent en effet d'obtenir une géométrie spécifique du copolymère à blocs, en fonction des propriétés visées. On peut en effet envisager de choisir les segments polymériques afin d'obtenir une modification des propriétés dudit copolymère à blocs suite à une modification de pKa ou pKb.

Le copolymère à blocs utilisé selon l'invention peut ainsi être un copolymère à bloc alterné, statistique, peigne.

Les figures 1-4 annexées présentent plusieurs variantes des copolymères à blocs convenant à l'invention.

### II - Electrolyte

Selon un mode préféré, le(s) copolymère(s) à blocs est/sont présents en une quantité allant de 1 à 25 % en poids et préférentiellement de 10 % à 20 % en poids par rapport au poids total de l'électrolyte.

L'électrolyte utilisé selon l'invention comprend au moins un sel de lithium. Les sels de lithium peuvent être choisis parmi tous les composés du lithium susceptibles d'être dissociés en un solvant organique pour produire des ions lithium. A titre d'exemples de ces composés du lithium, on peut citer LiClO₄, LiBF₄, LiPF₆, LiCF₃SO₃, LiN(CF₃SO₂)₂.

L'électrolyte utilisé selon l'invention peut comprendre tout solvant organique généralement utilisé pour la fabrication d'accumulateur électrochimique au lithium, en particulier le solvant est choisi parmi le carbonate d'éthylène, le carbonate de propylène, le carbonate de diméthyle, le carbonate d'éthylméthyle, le carbonate de diéthyle, le tétrahydrofurane, le tétraéthylene glycol dimethyl éther, le diméthyléther, le dioxolane, le dioxane, le polyéthylène glycol diméthyléther et ou les nitriles ou leur(s) mélange(s)

Ainsi, la conduction ionique est assurée par l'électrolyte contenant un solvant, ou un mélange de solvants, et comprenant le copolymère et des sels de lithium.

Comme il ressort de ce qui précède, le segment polymérique (B) est choisi de manière à ajuster la température « T », qui conditionne le changement de viscosité, à une valeur au-delà de laquelle l'électrolyte peut être aisément manipulé, en particulier est assez visqueux pour ne pas couler lors du remplissage de la cellule sans présenter de risques pour l'opérateur notamment de brûlures ou d'émanations toxiques.

Avantageusement, ledit électrolyte est manipulé, lors de la préparation de ladite batterie ou dudit accumulateur, à une température supérieure à la température « T », avantageusement allant de « T » à « T »+20°C.

Avantageusement la température « T » est inférieure ou égale à 80°C, de préférence «T » va de 40°C à 80°C, de manière préférée de 60 à 80°C et encore préférée de 70°C à 80°C.

De préférence, l'électrolyte sous forme gélifiée présente un module de conservation en cisaillement G' supérieur à 500 Pa et un module de perte en cisaillement G" inférieur à G'.

En outre, l'électrolyte présente une conductivité C1 variant de 10⁻⁴ S.cm⁻¹ à 0.1S.cm⁻¹ à une température inférieure à T, c'est-à-dire lorsqu'il est sous forme liquide.

### III - Procédé

L'invention vise encore un procédé de réalisation d'une batterie ou d'un accumulateur au lithium comportant au moins :
- une cellule électrochimique (C) constituée d'au moins une anode et une cathode, l'anode et la cathode faisant partie d'une électrode bipolaire, situées de part et d'autre d'un électrolyte imprégné d'un séparateur, et
- un compartiment agencé pour contenir la/les cellule(s) électrochimique(s) avec étanchéité et traversé par une partie des collecteurs de courant formant les pôles.

Plus particulièrement, l'électrolyte considéré selon l'invention, c'est-à-dire contenant au moins un copolymère thermosensible, est manipulé sous la forme d'une couche gélifiée, qui est déposée en surface de ladite anode ou cathode.

Avantageusement, la couche gélifiée d'électrolyte intègre déjà le séparateur pour former l'ensemble « séparateur/électrolyte ».

### Préparation de l'ensemble « séparateur/électrolyte »

Deux modes de réalisation peuvent être envisagés pour la préparation de cet ensemble selon l'architecture considérée pour la pile à savoir par « empilement » ou par « bobinage ».

Selon une première variante, privilégiée dans le cas d'une architecture par « empilement », le procédé comprend une étape consistant à procéder, à une température supérieure à la température « T » avantageusement allant de « T » à « T »+20°C, au dépôt dudit électrolyte gélifié sur au moins une surface d'un séparateur en une quantité suffisante pour former une couche supportée. Avantageusement, cette étape de dépôt de la couche d'électrolyte gélifié est réalisée dans un moule dans lequel au moins un séparateur généralement sous la forme d'une feuille ou d'un ruban a été préalablement déposé.

Selon une deuxième variante, privilégiée dans le cas d'une architecture par « bobinage », le procédé selon l'invention comprend une étape consistant à déposer, par enduction ou projection sur le séparateur considéré, l'électrolyte gélifié. Ce dépôt est effectué à une température supérieure à « T », avantageusement allant de « T » à « T »+20°C. Le séparateur est généralement sous la forme d'un ruban ou d'une feuille.

De manière plus détaillée, le procédé de réalisation d'une cellule électrochimique selon l'invention comprend au moins les étapes consistant à :
(a) préparer un élément unitaire par assemblage d'une électrode positive (cathode), de l'ensemble « séparateur/électrolyte » et d'une électrode négative (anode),
(b) mettre l'élément unitaire sous vide d'air, (c) réaliser l'étanchéité de l'élément unitaire en effectuant un vide d'air dans un caisson, et
(d) rétablir l'élément unitaire sous pression atmosphérique et température ambiante. A la température ambiante, c'est-à-dire une température inférieure à « T », l'électrolyte est sous forme liquide, en conséquence, cette étape permet de réaliser l'imprégnation du séparateur ainsi que la mise sous contrainte mécanique de l'élément unitaire.

Généralement, la cathode considérée en étape (a) figure la partie positive d'un collecteur de courant, appelé collecteur de courant 1, et l'anode utilisée est plus exactement la partie négative d'un collecteur de courant adjacent au collecteur de courant 1.

Avantageusement, l'étape (b) est effectuée dans un emballage de type caisson de volume adapté à la taille de l'empilement final correspondant à l'ensemble des éléments unitaires. L'utilisation d'un caisson de volume adapté permet de réaliser l'empilement en minimisant l'espace vide entre l'empilement et le caisson.

En étape (c), il peut être noté que le remplissage est toujours effectué avant l'étanchéité complète de l'élément. Plusieurs modes d'étanchéité sont compatibles avec le fait de travailler sous vide notamment étanchéité mécanique, thermoscellage, thermocollage, soudure ultrasons, cuisson UV... Le volume du caisson, adapté à la taille de l'empilement, permet en outre de minimiser les contraintes liées à la pression entre l'intérieur et l'extérieur de l'élément unitaire, l'étanchéité peut être réalisée par exemple par compression à froid, à chaud, sous UV.

La réalisation d'une batterie comprenant « n » empilements est effectuée en réitérant « n » fois les étapes mentionnées ci-dessus, « n » allant de 2 à 200.

Lors de la réalisation des éléments unitaires 2 à « n-1 », deux électrodes bipolaires sont utilisées.

Lors de la réalisation des éléments unitaires 1 et « n », une électrode terminale et une électrode bipolaire sont utilisées.

Les exemples de réalisation 1 et 2 figurant ci-après présentent des procédés de réalisation d'une batterie comprenant un électrolyte conforme à l'invention c'est-à-dire gélifié « à chaud » plus exactement gélifié à température supérieure à « T ». La batterie y est étanchéifiée via l'utilisation d'un caisson sous vide de volume réduit.

Les exemples qui suivent illustrent l'invention sans en limiter la portée.

### Exemple 1 :

### Préparation d'une cellule bipolaire par empilement avec un électrolyte conforme à l'invention.

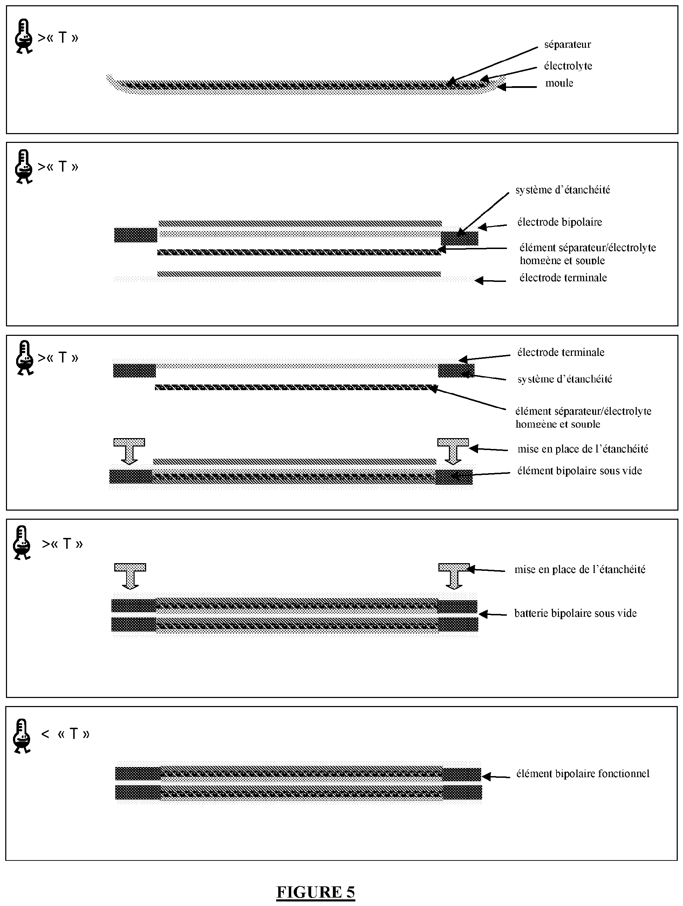

Ce procédé est illustré en figure 5 dans laquelle les étapes 1 à 5 sont présentées successivement de haut en bas.
Etape 1 - Gélification de l'électrolyte et de son additif (copolymère) dans un moule adapté, à une température supérieure à « T » particulièrement allant de 40°C à 80°C. La quantité d'électrolyte est adaptée aux besoins de l'élément batterie. La présence du séparateur dans le moule permet d'obtenir un ensemble « séparateur/électrolyte » sous forme solide.
Etape 2 - Mise en oeuvre d'un ensemble d'empilement unitaire « stacké » électrode / ensemble « séparateur/électrolyte » / électrode, en condition de température supérieure à « T », pour obtenir un élément bipolaire.
Etape 3 - Mise en place d'un système d'étanchéité de l'élément bipolaire sous vide pour éviter la présence d'air dans le système en condition de température élevée.
Etape 4 - Itération de l'étape d'assemblage et d'étanchéité (étape 2 et 3) pour fabriquer le nombre de compartiments tel que nécessaire à l'obtention de la batterie voulue en condition de température élevée.
Etape 5 - Remise à température ambiante de l'ensemble étanche pour permettre à l'électrolyte de retrouver ses propriétés optimales et obtenir une batterie bipolaire fonctionnelle.

### Exemple 2 :

### Préparation d'une cellule bipolaire bobinable à l'aide d'un électrolyte conforme à l'invention.

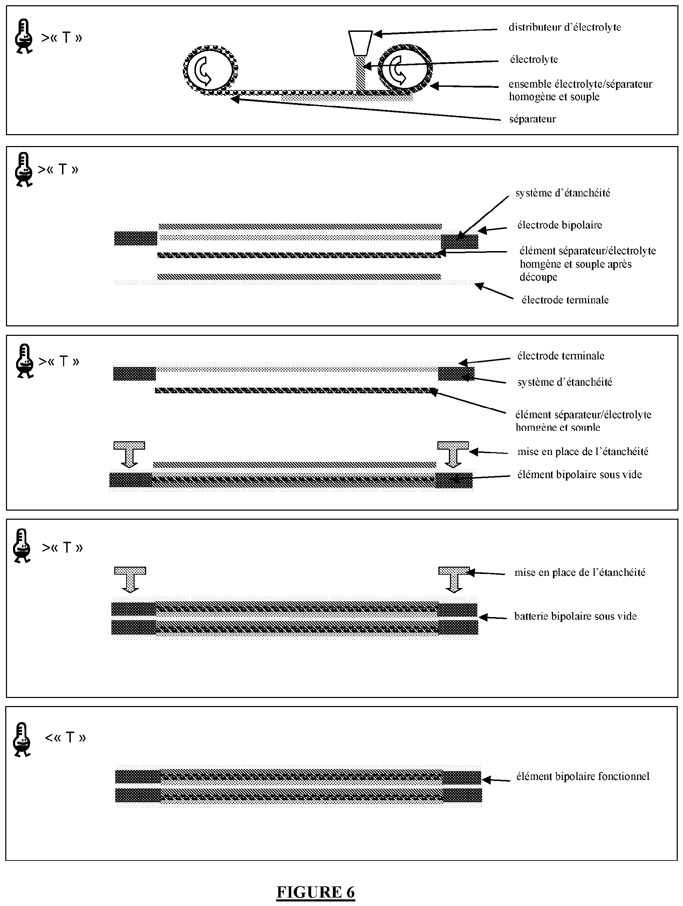

Ce procédé est illustré en figure 6 dans laquelle les étapes 1 à 5 sont présentées successivement de haut en bas.
Etape 1 - Mise en forme d'un ensemble électrolyte/séparateur utilisant les caractéristiques visqueuses de l'électrolyte et de son additif (copolymère) à une température supérieure à « T » particulièrement allant de 40°C à 80°C de manière à obtenir une feuille souple « séparateur/électrolyte » bobinable. A l'issue de cette étape, un ensemble séparateur/électrolyte « bobiné » est obtenu.
Etape 2 - Mise en oeuvre d'un ensemble électrode / ensemble « séparateur/électrolyte » / électrode en condition de température élevée. La méthode de fabrication utilisée est un système de lamination et de distribution des éléments de type « roll to roll » pour permettre une réalisation facilitée des éléments unitaires.
Etape 3 - Mise en place d'un système d'étanchéité de l'élément bipolaire sous vide pour éviter la présence d'air dans le système en condition de température élevée.
Etape 4 - Itération de l'étape d'assemblage et d'étanchéité (étape 2 et 3) pour fabriquer le nombre de compartiments tel que nécessaire à l'obtention de la batterie voulue en condition de température élevée.
Etape 5 - Remise à température ambiante de l'ensemble étanche pour permettre à l'électrolyte de retrouver ses propriétés optimales et obtenir une batterie bipolaire fonctionnelle.

Les procédés de préparation des exemples 1 et 2 ont été réalisés avec un copolymère formé des segments polymériques A, B et C suivants :
Segment A : polyacrylate (10000g.mol-1)
Segment B : poly(nbutyl methacrylamide (50000g.mol-1)
Segment C : Polyethylene (15000g.mol-1).
Le mélange : EC/PC/DMC (1/1/3)ₘₒₗ + 1M LiTFSI (LiN(CF3SO2)2) est utilisé comme électrolyte.

La température « T » de solubilisation du segment polymérique B correspondant à la gélification de l'électrolyte étant égale à 80°C.

## Revendications

1. Utilisation d'un électrolyte à changement de phase réversible liquide/ solide pour la préparation d'une batterie ou accumulateur lithium-ion bipolaire **caractérisée en ce que** ledit électrolyte contient un solvant ou mélange de solvants, au moins un sel de lithium et au moins un copolymère à blocs comprenant au moins un segment polymérique A soluble dans ledit électrolyte et au moins un segment polymérique B doté d'une température de solubilisation « T » dans ledit électrolyte, les segments polymériques A et B étant présents en des quantités suffisantes pour permettre la gélification physique de l'électrolyte à une température supérieure ou égale à la température « T »,ledit copolymère à blocs comprenant au moins un segment polymérique A choisi parmi les polymères suivants : polyacrylates, polyméthacrylates, polycarbonates, polyestercarbonates, polylactones, polylactames, polyesters, polyéthers, les homopolymères et copolymères statistiques solubles de polyéthers, en particulier de polyoxyéthylène, polyoxypropylène, polyoxybutylène, ainsi que les copolymères de ces polymères ou monomères correspondants,ledit copolymère à blocs comprenant au moins un segment polymérique B obtenu à partir d'au moins un monomère choisi parmi les monomères suivants : les acides acryliques et méthacryliques, les N-alkyl-acrylamides ou N-alkyl-méthacrylamides, en particulier le N-isopropylacrylamide, le N-isopropylmethacrylamide, le N,N'diéthylacrylamide, les saccharides, le fluorure de vinylidène, l'Hexafluoropropylène, le ratio molaire segments polymériques B/ segments polymériques A étant supérieur à 0.5.

2. Utilisation d'un électrolyte à changement de phase réversible liquide/solide pour la préparation d'une batterie ou accumulateur lithium-ion bipolaire selon la revendication 1 **caractérisée en ce que** la température dudit électrolyte est supérieure à la température « T », avantageusement allant de « T » à « T »+20°C.

3. Utilisation selon l'une des revendications précédentes **caractérisée en ce que** la température « T » varie de 40°C à 80°C.

4. Utilisation selon l'une des revendications précédentes dans lequel l'électrolyte sous forme gélifiée présente un module de conservation en cisaillement G' supérieur à 500 Pa et un module de perte en cisaillement G" inférieur à G'.

5. Utilisation selon l'une des revendications 1 à 4 dans lequel l'électrolyte présente une conductivité C1 variant de 10⁻⁴ S.cm⁻¹ à 0.1S.cm⁻¹ à une température inférieure à T.

6. Utilisation selon l'une des revendications précédentes dans lequel le copolymère à blocs comprend au moins un segment polymérique B, ledit au moins un segment choisi parmi les poly (N-alkyl-acrylamides), poly(N-alkyl-méthacrylamides), les polysaccharides, le polyfluorure de vinylidène et les copolymères polyfluorures de vinylidène-hexafluoropropylène.

7. Utilisation selon l'une des revendications précédentes dans lequel le copolymère à blocs comprend au moins un segment polymérique A et au moins un segment polymérique B, le ratio molaire segments polymériques B/ segments polymériques A allant de 1 à 10 et plus préférentiellement de 2 à 5.

8. Utilisation selon l'une des revendications précédentes dans lequel le copolymère à blocs comprend au moins un segment polymérique C insoluble dans l'électrolyte, de préférence choisi parmi les polyoléfines saturées ou insaturées, branchées ou non branchées, en particulier en C₂-C₁₂, le polystyrène et leurs mélanges et leurs copolymères.

9. Utilisation selon l'une des revendications précédentes dans lequel le(s) copolymère à blocs est/sont présents en une quantité allant de 1 à 25 % en poids et préférentiellement de 10 % à 20 % en poids par rapport au poids total de l'électrolyte.

10. Procédé de réalisation d'une batterie ou d'un accumulateur au lithium comportant au moins une cellule électrochimique (C) constituée d'au moins une anode et une cathode de part et d'autre d'un séparateur imprégné d'un électrolyte, et un compartiment agencé pour contenir la/les cellule(s) électrochimique(s) avec étanchéité tout en étant traversé par une partie des collecteurs de courant formant les pôles **caractérisé en ce que** :
- ledit électrolyte est à changement de phase réversible liquide/solide et contient un solvant ou mélange de solvants, au moins un sel de lithium et au moins un copolymère à blocs comprenant au moins un segment polymérique A soluble dans ledit électrolyte et au moins un segment polymérique B doté d'une température de transition de solubilisation « T » dans ledit électrolyte, les segments polymériques A et B étant présents en des quantités suffisantes pour permettre la gélification physique de l'électrolyte à une température supérieure ou égale à la température « T »
ledit copolymère à blocs comprenant au moins un segment polymérique A choisi parmi les polymères suivants : polyacrylates, polyméthacrylates, polycarbonates, polyestercarbonates, polylactones, polylactames, polyesters, polyéthers, les homopolymères et copolymères statistiques solubles de polyéthers, en particulier de polyoxyéthylène, polyoxypropylène, polyoxybutylène, ainsi que les copolymères de ces polymères ou monomères correspondants,
ledit copolymère à blocs comprenant au moins un segment polymérique B obtenu à partir d'au moins un monomère choisi parmi les monomères suivants : les acides acryliques et méthacryliques, les N-alkyl-acrylamides ou N-alkyl-méthacrylamides, en particulier le N-isopropylacrylamide, le N-isopropylmethacrylamide, le N,N'diéthylacrylamide, les saccharides, le fluorure de vinylidène, l'Hexafluoropropylène,
- le ratio molaire segments polymériques B/ segments polymériques A étant supérieur à 0.5
- et ledit procédé comprend au moins les étapes consistant :
- à manipuler ledit électrolyte lors de l'élaboration de ladite cellule à une température supérieure ou égale à la température « T » et
- à abaisser la température dudit électrolyte, à l'issue de la réalisation de l'étanchéité de ladite cellule contenant ledit électrolyte gélifié, à une température inférieure à la température T,

11. Procédé selon la revendication précédente dans lequel ledit électrolyte est mis en oeuvre sous la forme d'une couche gélifiée qui est déposée en surface de ladite anode ou cathode.

12. Procédé selon la revendication précédente dans lequel la couche gélifiée dudit électrolyte intègre déjà ledit séparateur.

13. Procédé selon la revendication 11 dans laquelle l'ensemble électrolyte gélifié/séparateur est obtenu par enduction/projection dudit électrolyte gélifié sur le séparateur.

14. Procédé selon l'une des revendications 10 à 13 comportant un empilement de plusieurs cellules électrochimiques (C).

## Patentansprüche

1. Verwendung eines Elektrolyten mit reversiblem Flüssig/Fest-Phasenübergang zur Herstellung einer Batterie oder eines bipolaren Lithium-Ionen-Akkumulators, **dadurch gekennzeichnet, dass** der Elektrolyt ein Lösungsmittel oder ein Gemisch aus Lösungsmitteln, wenigstens ein Lithiumsalz und wenigstens ein Block-Copolymer enthält, wobei das Block-Copolymer wenigstens ein polymeres Segment A, das in dem Elektrolyten löslich ist, und wenigstens ein polymeres Segment B enthält, das eine Temperatur "T" der Löslichkeit in dem Elektrolyten hat, wobei die polymeren Segmente A und B in Mengen vorhanden sind, die ausreichen, die physikalische Gelierung des Elektrolyten bei einer Temperatur oberhalb oder gleich der Temperatur "T" zu ermöglichen, wobei das genannte Block-Copolymer wenigstens ein polymeres Segment A enthält, das ausgewählt ist unter den folgenden Polymeren: Polyacrylaten, Polymethacrylaten, Polycarbonaten, Polyestercarbonaten, Polylaktonen, Polylaktamen, Polyestern, Polyethern, löslichen statistischen Copolymeren und Homopolymeren von Polyethern, insbesondere Polyoxyethylenen, Polyoxypropylenen, Polyoxybutylen, sowie Copolymeren dieser Polymere oder entsprechender Monomere, wobei das genannte Block-Copolymer wenigstens ein polymeres Segment B enthält, das erhalten wird aus wenigstens einem Monomer, das ausgewählt ist unter den folgenden Monomeren: Acryl- und Methacrylsäuren, N-Alcyl-Acrylamiden oder N-Alkyl-Methacrylamiden, insbesondere N-Isopropylacrylamid, N-Isopropylmethacrylamid, N,N'-Diethylacrylamid, Sacchariden, Vinylidenfluorid, Hexafluorpropylen, wobei das Molverhältnis des polymeren Segments B zu dem polymeren Segment A größer als 0,5 ist.

2. Verwendung eines Elektrolyten mit reversiblem Flüssig/Fest-Phasenübergang zur Herstellung einer Batterie oder eines bipolaren Lithium-Ionen-Akkumulators nach Anspruch 1, **dadurch gekennzeichnet, dass** die Temperatur des Elektrolyten größer ist als die Temperatur "T", vorzugsweise von "T" bis "T" + 20°C.

3. Verwendung nach einem der vorstehenden Ansprüche, **dadurch gekennzeichnet, dass** die Temperatur "T" von 40°C bis 80°C variiert.

4. Verwendung nach einem der vorstehenden Ansprüche, bei der der Elektrolyt in gelierter Form ein Speicher-Schubmodul G' von mehr 500 Pa und ein Verlust-Schubmodul G" kleiner als G' hat.

5. Verwendung nach einem der Ansprüche 1 bis 4, bei der der Elektrolyt bei einer Temperatur unterhalb von T eine Leitfähigkeit C1 zwischen 10⁻⁴ S.cm⁻² bis 0.1 S.cm⁻¹ hat.

6. Verwendung nach einem der vorstehenden Ansprüche, bei der das Block-Copolymer wenigstens ein polymeres Segment B enthält, wobei dieses wenigstens eine Segment ausgewählt ist unter Poly(N-Alkyl-Acrylamiden), Poly(N-Alkyl-Metacrylamiden), Polysacchariden, Vinyliden-Polyfluorid und Vinyliden-Hexafluorpropylen-Polyfluorid-Copolymeren.

7. Verwendung nach einem vorstehenden Ansprüche, bei dem das Block-Copolymer wenigstens ein polymeres Segment A und wenigstens ein polymeres Segment B enthält, wobei das Molverhältnis des polymeren Segments B zu dem polymeren Segment A zwischen 1 und 10, vorzugsweise zwischen 2 und 5 beträgt.

8. Verwendung nach einem der vorstehenden Ansprüche, bei der das Block-Copolymer wenigstens ein polymeres Segment C enthält, das in dem Elektrolyten unlöslich ist, vorzugsweise ausgewählt unter gesättigten oder ungesättigten, verzweigten oder nicht verzweigten Polyolefinen, insbesondere mit C₂-C₁₂, Polystyrol und ihren Gemischen und Copolymeren.

9. Verwendung nach einem der vorstehenden Ansprüche, bei der das oder die BlockCopolymere in einer Menge vorhanden ist/sind, die 1 bis 25 Gew.%, vorzugsweise 10 bis 20 Gew.% in Bezug auf das Gesamtgewicht des Elektrolyten beträgt.

10. Verfahren zur Herstellung einer Batterie oder eines Lithium-Akkumulators mit wenigstens einer elektrochemischen Zelle (C), die gebildet wird durch wenigstens eine Anode und eine Kathode beiderseits einer mit einem Elektrolyten imprägnierten Trennwand und ein Behältnis, das dazu ausgebildet ist, das oder die elektrochemische(n) Zelle(n) dicht aufzunehmen und dabei von einem Teil von Stromkollektoren durchsetzt wird, die die Pole bilden, **dadurch gekennzeichnet, dass**:
- der Elektrolyt einen reversiblen Flüssig/Fest-Phasenübergang aufweist und ein Lösungsmittel oder ein Gemisch aus Lösungsmitteln, wenigstens ein Lithiumsalz und wenigstens ein Block-Copolymer enthält, das wenigstens ein polymeres Segment A, das in dem Elektrolyten löslich ist, und wenigstens ein polymeres Segment B enthält, das eine Übergangstemperatur "T" der Löslichkeit in dem Elektrolyten aufweist, wobei die polymeren Segmente A und B in Mengen vorhanden sind, die ausreichen, die physikalische Gelierung des Elektrolyten bei einer Temperatur oberhalb oder gleich der Temperatur "T" zu ermöglichen,
wobei das genannte Block-Copolymer wenigstens ein polymeres Segment A enthält, das ausgewählt ist unter den folgenden Polymeren: Polyacrylaten, Polymethacrylaten, Polycarbonaten, Polyestercarbonaten, Polylaktonen, Polylaktamen, Polyestern, Polyethern, löslichen statistischen Copolymeren und Homopolymeren von Polyethern, insbesondere Polyoxyethylenen, Polyoxypropylenen, Polyoxybutylen, sowie Copolymeren dieser Polymere oder entsprechender Monomere,
wobei das genannte Block-Copolymer wenigstens ein polymeres Segment B enthält, das erhalten wird aus wenigstens einem Monomer, das ausgewählt ist unter den folgenden Monomeren: Acryl- und Methacrylsäuren, N-Alkyl-Acrylamiden oder N-Alkyl-Methacrylamiden, insbesondere N-Isopropylacrylamid, N-Isopropylmethacrylamid, N,N'-Diethylacrylamid, Sacchariden, Vinylidenfluorid, Hexafluorpropylen,
wobei das Molverhältnis des polymeren Segments B zu dem polymeren Segment A größer als 0,5 ist,
- und das Verfahren wenigstens die Schritte umfasst, die bestehen in:
- Manipulieren des Elektrolyten bei der Ausbildung der genannten Zelle bei einer Temperatur oberhalb oder gleich der Temperatur "T" und
- Absenken der Temperatur des Elektrolyten am Ende der Herstellung der Dichtheit der Zelle, die den genannten gelierten Elektrolyten enthält, auf eine Temperatur unterhalb der Temperatur T.

11. Verfahren nach dem vorstehenden Anspruch, bei dem der Elektrolyt in der Form einer gelierten Schicht bereitgestellt wird, die auf der Oberfläche der genannten Anode oder Kathode abgelagert ist.

12. Verfahren nach dem vorstehenden Anspruch, bei dem die gelierte Schicht des Elektrolyten bereits die Trennwand enthält.

13. Verfahren nach Anspruch 11, bei dem die Einheit aus geliertem Elektrolyten und Trennwand erhalten wird durch Beschichten/Auftragen des gelierten Elektrolyten auf der Trennwand.

14. Verfahren nach einem der Ansprüche 10 bis 13, mit einer Stapelung von mehreren elektrochemischen Zellen (C).

## Claims

1. Use of an electrolyte having a reversible liquid/solid phase change in the preparation of a bipolar lithium-ion battery or accumulator, **characterized in that** the said electrolyte contains a solvent or a mixture of solvents, at least one lithium salt and at least one block copolymer comprising at least one polymeric segment A which is soluble in the said electrolyte and at least one polymeric segment B having a temperature for dissolution "T" in the said electrolyte, the polymeric segments A and B being present in amounts sufficient to make possible the physical gelling of the electrolyte at a temperature greater than or equal to the temperature "T", said block copolymer comprises at least one polymeric segment A chosen from the following polymers: polyacrylates, polymethacrylates, polycarbonates, polyester carbonates, polylactones, polylactams, polyesters, polyethers, soluble homopolymers and random copolymers of polyethers, in particular of polyoxyethylene, polyoxypropylene or polyoxybutylene, and also the copolymers of these polymers or corresponding monomers, said block copolymer comprises at least one polymeric segment B obtained from at least one monomer chosen from the following monomers: acrylic and methacrylic acids, N-alkylacrylamides or N-alkylmethacrylamides, in particular N-isopropylacrylamide, N-isopropylmethacrylamide or N,N-diethylacrylamide, saccharides, vinylidene fluoride or hexafluoropropylene, the polymeric segments B/polymeric segments A molar ratio being greater than 0.5.

2. Use of an electrolyte having a reversible liquid/solid phase change in the preparation of a bipolar lithium-ion battery or accumulator according to Claim 1, **characterized in that** the said electrolyte is handled, during the preparation of the said battery or of the said accumulator, at a temperature greater than the temperature "T", advantageously ranging from "T" to "T"+20°C.

3. Use according to either of the preceding claims, **characterized in that** the temperature "T" varies from 40°C to 80°C.

4. Use according to one of the preceding claims, in which the electrolyte in the gelled form exhibits a shear storage modulus G' of greater than 500 Pa and a shear loss modulus G" of less than G'.

5. Use according to one of Claims 1 to 4, in which the electrolyte exhibits a conductivity C1 varying from 10⁻⁴ S.cm⁻¹ to 0.1 S.cm⁻¹ at a temperature of less than "T".

6. Use according to the preceding claim, in which the block copolymer comprises at least one polymeric segment B, said at least one segment is chosen from poly(N-alkylacrylamides), poly(N-alkylmethacrylamides), polysaccharides, polyvinylidene fluoride and poly(vinylidene fluoride-hexafluoropropylene) copolymers.

7. Use according to one of the preceding claims, in which the block copolymer comprises at least one polymeric segment A and at least one polymeric segment B, the polymeric segments B/polymeric segments A molar ratio ranging from 1 to 10 and more preferably from 2 to 5.

8. Use according to one of the preceding claims, in which the block copolymer comprises at least one polymeric segment C which is insoluble in the electrolyte, preferably chosen from saturated or unsaturated and branched or unbranched polyolefins, in particular poly(C₂-C₁₂ olefins), polystyrene and their mixtures and their copolymers.

9. Use according to one of the preceding claims, in which the block copolymer(s) is/are present in an amount ranging from 1 to 25% by weight and preferably from 10 to 20% by weight, with respect to the total weight of the electrolyte.

10. Process for preparing a lithium battery or accumulator comprising at least one electrochemical cell (C), composed of at least one anode and one cathode on either side of a separator impregnated with an electrolyte, and one compartment constructed in order to contain the electrochemical cell(s) with leaktightness while being traversed by a portion of the current collectors forming the poles, **characterized in that**:
- the said electrolyte is one having a reversible liquid/solid phase change and contains a solvent or a mixture of solvents, at least one lithium salt and at least one block copolymer comprising at least one polymeric segment A which is dissolved in the said electrolyte and at least one polymeric segment B having a transition temperature for dissolution "T" in the said electrolyte, the polymeric segments A and B being present in amounts sufficient to make possible the physical gelling of the electrolyte at a temperature greater than or equal to the temperature "T",
- said block copolymer comprises at least one polymeric segment A chosen from the following polymers: polyacrylates, polymethacrylates, polycarbonates, polyester carbonates, polylactones, polylactams, polyesters, polyethers, soluble homopolymers and random copolymers of polyethers, in particular of polyoxyethylene, polyoxypropylene or polyoxybutylene, and also the copolymers of these polymers or corresponding monomers,
- said block copolymer comprises at least one polymeric segment B obtained from at least one monomer chosen from the following monomers: acrylic and methacrylic acids, N-alkylacrylamides or N-alkylmethacrylamides, in particular N-isopropylacrylamide, N-isopropylmethacrylamide or N,N-diethylacrylamide, saccharides, vinylidene fluoride or hexafluoropropylene,
- the polymeric segments B/polymeric segments A molar ratio being greater than 0.5.
- the said process comprises at least the stages consisting in:
- handling the said electrolyte during the production of the said cell at a temperature greater than or equal to the temperature "T" and
- lowering the temperature of the said electrolyte, after the leaktightness of the said cell containing the said gelled electrolyte has been obtained, to a temperature less than the temperature T.

11. Process according to the preceding claim, in which the said electrolyte is employed in the form of a gelled layer which is deposited at the surface of the said anode or cathode.

12. Process according to the preceding claim, in which the gelled layer of the said electrolyte already incorporates the said separator.

13. Process according to Claim 21, in which the gelled electrolyte/separator combination is obtained by coating/spraying the said gelled electrolyte over the separator.

14. Process according to one of Claims 19 to 22, comprising a stack of several electrochemical cells (C).
